# EUROPEAN PATENT APPLICATION

(11) **EP 1 739 527 A2**
(43) Date of publication of application: **03.01.2007**
(21) Application number: 06009974.4
(22) Date of filing: 15.05.2006
(51) Int. Cl.: G06F 3/033, G06F 3/039

(54) **Wireless mouse system**

(30) Priority: 30.06.2005 KR 10200558164
(71) Applicant: LG Electronics Inc., Yongdungpo-Gu Seoul (KR)
(72) Inventor: Lee, In Jik c/o LG Women's Dormitory No. 311, Cheongju-si Chuncheongbuk-do 361-300 (KR); Lee, Jae Hoon, Gyeonggi-do 471-765 (KP)
(74) Representative: Katérle, Axel

(57) **Abstract**

The present invention relates to a wireless mouse system. Particularly, the present invention relates to a wireless mouse system which can integrate a flash memory device and a receiving device of a wireless mouse into one device. A wireless mouse system comprises a wireless mouse; and an interfacing device with a USB terminal, electrically communicated with a USB port of a information-displaying device, and having at least one recess disposed on a surface thereof, wherein the interfacing device comprises a receiving device receiving a signal data transferred wirelessly from the wireless mouse, and transferring the signal to the information-displaying device; and a flash memory device exchanging data with the information-displaying device through the USB terminal.

## Description

### BACKGROUND OF THE INVENTION

### Field of the Invention

The present invention relates to a wireless mouse system. Particularly, the present invention relates to a wireless mouse system which can integrate a flash memory device and a receiving device of a wireless mouse into one device.

Also, the present invention relates to a wireless mouse. Particularly, the present invention relates to a wireless mouse which can releasably retain an interface device therein.

### Description of the Related Art

Because a computer, a monitor, a keyboard and cables thereof are arranged separately in a confined area, the effective use of the working area is restricted. For that reason, a laptop computer is widely used in order to provide convenience and rapidity to users working in a small room, outdoors, or on the move.

The laptop computer is portable device, and thus has a pointing device, such as a touch pad or a track ball, instead of a mouse. Such a pointing device has drawbacks that the pointing speed of the pointing device is slower than that of the mouse, and that accuracy of the pointing device is lower than that of the mouse.

Therefore, a wire mouse connected to the laptop computer has been used more frequently than the pointing device. However, the connection between the laptop computer and the wire mouse is inconvenient, and the use of the wire mouse is restricted by the confined working area where the laptop computer is used. In order to resolve these problems, a wireless mouse has been developed.

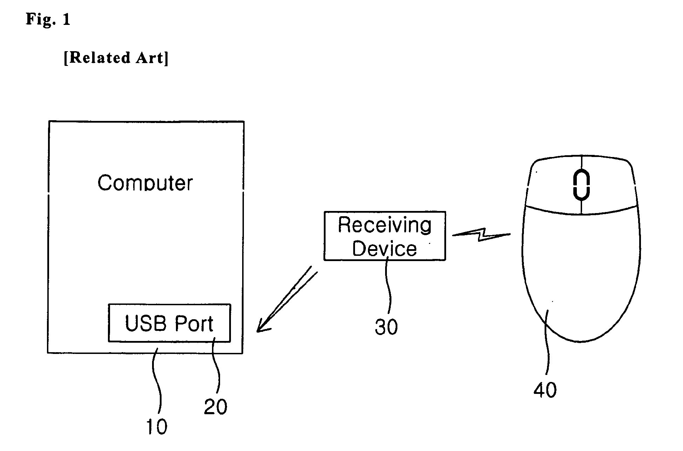

Fig.1 is a block diagram illustrating the constitution of a wireless mouse according to the related art.

Referring to Fig. 1, the wireless mouse system comprises a wireless mouse 40, a receiving device 30, a computer 10, and a USB port 20. The wireless mouse 40 is operated by a independent power source.

The USB port 20 is installed on the computer 10 for connecting an internal processor of the computer 10 to an external communication device.

The receiving device 30 is connected to the USB port 20, receives a operating signal from the wireless mouse 40, and transfers the operating signal to the computer 10. The operating signal of the wireless mouse 40 is inputted through the USB port 20, and the computer 10 processes the operating signal.

The wireless mouse system described above necessarily needs the separate receiving device 30. Therefore, it is inconvenient to separately carry the receiving device 30 as well as the wireless mouse 40.

Recently, as the use of peripheral equipments is increasing, the use of a flash memory connected to the USB port 20 is increasing.

Therefore, it is necessary for a user of the laptop computer to separately carry the flash memory as well as the laptop computer 10, the wireless mouse 40 and the receiver 30. It is inconvenient for the user to carry all of them, and also increases the probability of losing the above devices.

### SUMMARY OF THE INVENTION

An object of the present invention is to provide a wireless mouse system in which a receiving device and a flash memory device can be integrated into an interfacing device.

Another object of the present invention is to provide a wireless mouse system and a wireless mouse, wherein an interfacing device, which a receiving device and a flash memory device is integrated into, can be inserted in the wireless mouse.

A wireless mouse system according to the present invention comprises a wireless mouse; and an interfacing device with a USB terminal, electrically communicated with a USB port of a information-displaying device, and having at least one recess disposed on a surface thereof, wherein the interfacing device comprises a receiving device receiving a signal data transferred wirelessly from the wireless mouse, and transferring the signal to the information-displaying device; and a flash memory device exchanging data with the information-displaying device through the USB terminal.

The wireless mouse comprises a socket releasably retaining the interfacing device inserted therein; and a fixing member having at least one protrusion, wherein at least one protrusion is releasably inserted into the at least one recess of the interfacing device retained in the socket.

The interfacing device further comprises a controller transferring the signal of the receiving device to the information-displaying device, exchanging the data of the flash memory device with the information-displaying device, and coupled to the USB terminal, the receiving device and the flash memory device; and a selection switch coupled to the controller, and switched to the receiving device or the flash memory device, wherein the controller transfers a control signal to the switched device by the selection switch.

A wireless mouse comprises a socket releasably retaining an interfacing device inserted therein, wherein the interfacing device has a USB terminal, and at least one recess disposed on a surface of the interfacing device.

The wireless mouse further comprises a fixing member having at least one protrusion, wherein at least one protrusion is releasably inserted into the at least one recess of the interfacing device retained in the socket.

The wireless mouse system according to the present invention can integrate the receiving device and the flash memory device into the interfacing device.

Also, the wireless mouse system according to the present invention can insert the interfacing device comprising the receiving device and the flash memory device into the wireless mouse, which provides convenience and portableness.

### BRIEF DESCRIPTION OF THE DRAWING

Fig.1 is a block diagram illustrating the constitution of a wireless mouse according to the related art.

Fig. 2 is a block diagram illustrating the elements of the wireless mouse system according to the preferred embodiment of the present invention.

Fig. 3a is a perspective view illustrating that the wireless mouse and the interfacing device are separated.

Fig. 3b is a perspective view illustrating that the interfacing device is inserted into the wireless mouse.

Fig. 4 is a sectional view illustrating the interfacing device fixed in the wireless mouse.

Fig. 5 is a sectional view illustrating the interfacing device released from the wireless mouse.

Fig. 6 is a sectional view illustrating another interfacing device fixed in the wireless mouse.

### DETAILED DESCRIPTION OF THE INVENTION

Hereinafter, the preferred embodiments of the present invention will be explained in more detail with reference to the accompanying drawings.

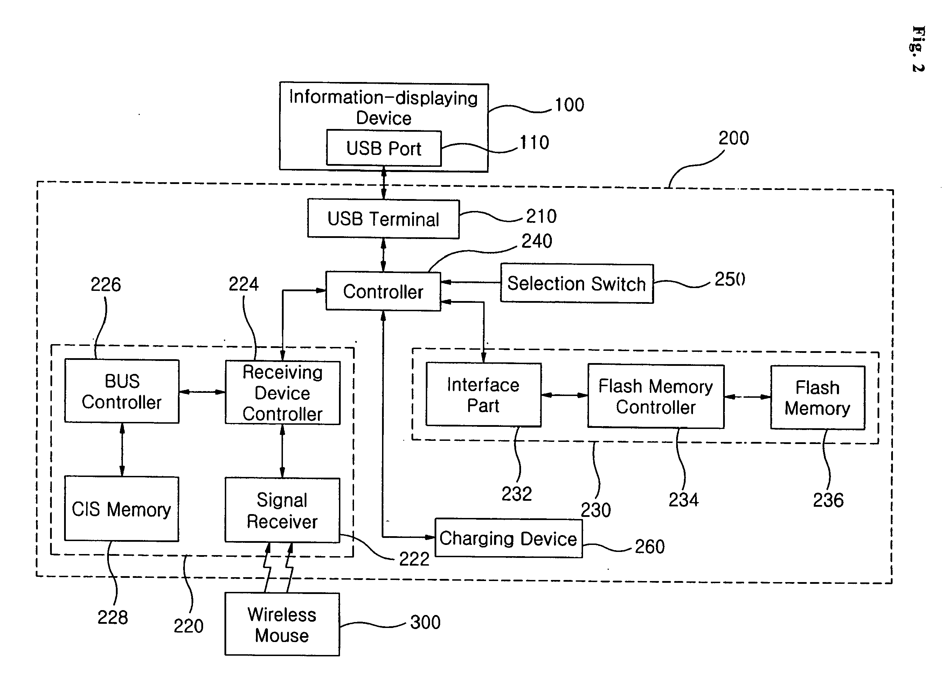

Fig. 2 is a block diagram illustrating the elements of the wireless mouse system according to the preferred embodiment of the present inevention.

Referring to Fig. 2, the wireless mouse system of the present invention comprises an information-displaying device 100, a wireless mouse 300 and an interfacing device 200.

The information-displaying device 100 is operated by OS, and operates programs of the information-displaying device 100 with the input data of the wireless mouse 300.

A USB port 110 is disposed on one end of the information-displaying device 100.

Usually, a computer can be connected to a keyboard, a monitor, a mouse, a printer, a modem, etc by USB. It is possible for one hundred twenty seven devices to be connected simultaneously to the computer. Also, when new peripheral equipments are connected to the computer, they can be recognized automatically, and conveniently connected without rebooting or set-up.

The USB port 110 receives operating signals of the wireless mouse 300 from the receiving device 220, and transfers them to the information-displaying device 100. Also, the USB port 110 is used for exchanging data with a flash memory device 230. The USB port 110 is manufactured whereby a USB terminal 210 of the interfacing device 200 can be inserted therein.

The wireless mouse 300 can utilize RF, infrared ray or other local area communication method.

The wireless mouse 300 comprises a ball or an optical sensor which can sense the operation of the wireless mouse 300, such as mouse button click or mouse wheel rotation. The wireless mouse 300 transfers the signal corresponding to the operation thereof to the receiving device 220 through an internal communication means corresponding to a local area communication means of the receiving device 220. The wireless mouse 300 needs an independent power source for the operation thereof.

The interfacing device 200 comprises the USB terminal 210, the receiving device 220, the flash memory device 230, a controller 240 and a selection switch 250.

The USB terminal 210 is a connector coupled to the USB port 110 disposed on the information-displaying device 100, and is configured to receive the electrical signals transferred from the USB port 110 by a conductor such as a metal.

The receiving device 220 comprises a signal receiver 222, a receiving device controller 224, a BUS controller 226 and a CIS (Card Information Structure) memory 228.

After receiving analog signals in the unit of packet, generated from the wireless mouse 300, the signal receiver 222 transforms the analog signals to digital signals, and transfers the digital signals to the receiving device controller 224 in series.

The receiving device controller 224 receives commands of the information-displaying device 100 through the controller 240, and performs control operations. Primarily, after deciding whether there exists an error in the digital signals transferred from the signal receiver 222, the receiving device controller 224 processes the digital signals thereby generating the information-displaying device data.

The CIS memory 228 stores the data about the function and characteristic of the receiving device 220.

The BUS controller 226 decodes the address BUS (not shown) and the data BUS (not shown), of the information-displaying device 100 thereby transferring the processed information-displaying device data to the information-displaying device 100 through the USB terminal 210 with using the data stored in the CIS memory 228.

The signal packet generated from the wireless mouse 300 includes the amount of movement, the direction of movement and the mouse button click, of the wireless mouse 300.

The flash memory device 230 comprises an interface part 232, a flash memory controller 234 and a flash memory 236.

The interface part 232 receives the packet transferred through the USB terminal 210, and output it to the flash memory controller 234. Also, the interface part 232 transforms the data outputted from the flash memory 236 into USB signals, and transfers the USB signals to the USB terminal 210.

The flash memory controller 234 is connected to the interface part 232 and the flash memory 236, and controls the data read/write of the flash memory 236.

The flash memory controller 234 recognizes the address included in the packet outputted from the interface part 232. Then, the flash memory controller 234 writes the data included in the packet on the corresponding address of the flash memory 236, or transfers the data read from the flash memory 236 to the interface part 232.

The selection switch 250 switches to the receiving device 220 or the flash memory device 230, of the interfacing device 200.

For example, if the button of the selection switch 250 is pushed, the receiving device 220 (or the flash memory device 230) is selected. And, if the button of the selection switch 250 is pushed again, the flash memory device 230 (or the receiving device 220) is selected.

When the selection switch 250 selects the desired device, the controller 240 transfers a control command to the receiving device controller 224 and the flash memory controller 234 whereby the interfacing device 200 can be operated as the selected device.

Also, the interfacing device 200 can further comprise a charging device 260 for charging the wireless mouse 300. If the interfacing device 200 is inserted into the USB port 110 of the information-displaying device 100, the information-displaying device 100 starts to charge the charging device 260. Then, if the charging device 260 is inserted into the wireless mouse 300, the wireless mouse 300 is charged from the charging device 260.

The interfacing device 200 is configured to be releasably inserted into the socket of the wireless mouse 300.

Hereinafter, the method of inserting the interfacing device 200 into the wireless mouse 300, and releasing the interfacing device 200 from the wireless mouse 300, will be explained.

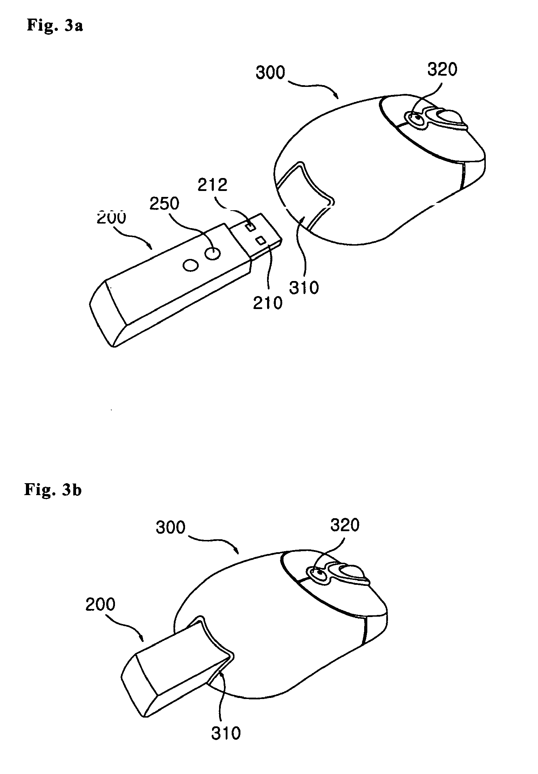

Fig. 3a is a perspective view illustrating that the wireless mouse and the interfacing device are separated. Fig. 3b is a perspective view illustrating that the interfacing device is inserted into the wireless mouse.

Referring to Fig. 3a and 3b, an inlet part 310 is mounted on the rear surface of the wireless mouse 300, wherein the interfacing device 200 is inserted into the wireless mouse 300 through the inlet part 310.

In order to be connected to the USB port 110 of the information-displaying device 100, thereby serving wireless communication with the wireless mouse 300, the interfacing device 200 is separated from the wireless mouse 300 through the inlet part 310 as illustrated in Fig. 3a. The wireless mouse 300 is designed to release the interfacing device 200 when a release button of a fixing member 320, disposed on the upper surface of the wireless mouse 300, is pushed.

In case that the interfacing device 200 is not used, the interfacing device 200 is retained in the socket of the wireless mouse 300 through the inlet part 310 as illustrated in Fig. 3b. The wireless mouse 300 is designed to fix the interfacing device 200 therein when the interfacing device 200 is pushed into the inlet part 310.

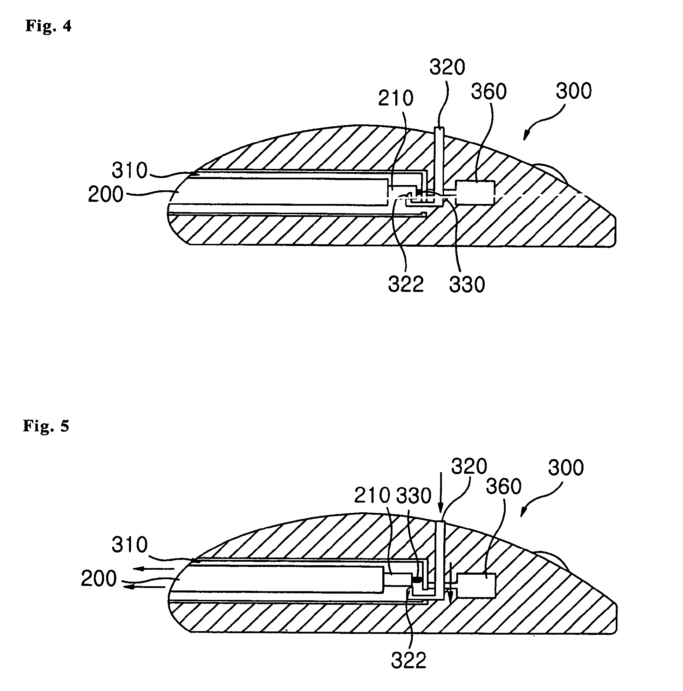

Fig. 4 is a sectional view illustrating the interfacing device fixed in the wireless mouse. Fig. 5 is a sectional view illustrating the interfacing device released from the wireless mouse.

The fixing member 320 is installed in the wireless mouse 300. The release button is disposed on an end of the fixing member 320, and is protruded from the surface of the wireless mouse 300. At least one protrusion 322 is disposed on the other end of the fixing member 320, which corresponds to at least one recess 212 disposed on the USB terminal 210 of the interfacing device 200 retained in the wireless mouse 300. The protrusion 322 is wedge-shaped. When the release button is pushed, the fixing member 320 moves downward.

Also, an elastic member 330, such as a spring, is mounted on the socket of the wireless mouse 300, and corresponds to the USB terminal 210 of the interfacing device 200 retained in the socket of the wireless mouse 300.

When the interfacing device 200 is inserted into the wireless mouse 300 through the inlet part 310, the USB terminal 210 pushes the wedge-shaped protrusion 322, whereby the wedge-shaped protrusion 322 moves under the USB terminal 210. Then, as the interfacing device 200 continues to move forward, the wedge-shaped protrusion 322 is inserted into the recess 212 disposed on the USB terminal 210. Therefore, the interfacing device 200 is fixed in the socket of the wireless mouse 300.

The interfacing device 200 retained in the socket of the wireless mouse 300 is coupled to an auxiliary battery 360 through the USB terminal 210, wherein the auxiliary battery 360 is charged from the charging device 260 of the interfacing device 200.

In order to release the interfacing device 200 from the wireless mouse 300, the release button disposed on the upper surface of the wireless mouse 300 is pushed, whereby the fixing member 320 moves downward. Then, as illustrated in Fig. 5, the protrusion 322, which has been inserted into the recess 212 disposed on the USB terminal 210, also moves downward, whereby the USB terminal 210 is separated from the protrusion 322.

Also, the elastic member 330 mounted on the socket of the wireless mouse 300 pushes the interfacing device 200 to the outside of the wireless mouse 300, and then the interfacing device 200 is separated form the wireless mouse 300.

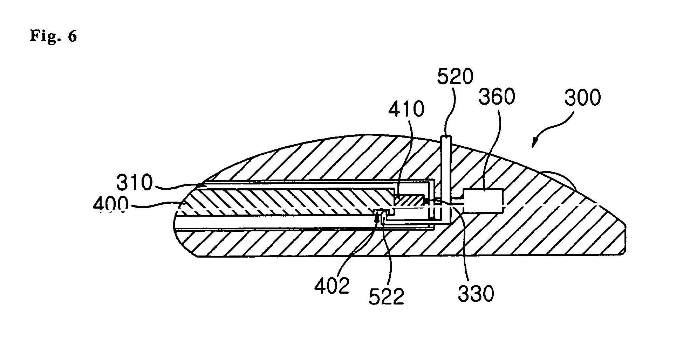

Fig. 6 is a sectional view illustrating another interfacing device fixed in the wireless mouse.

The constitution that the protrusion 322 is inserted into the recess 212 disposed on the USB terminal 210, illustrated in Fig. 4 and Fig. 5. can be modified to the constitution that a protrusion 522 is inserted into a recess 402 disposed on an interfacing device 400 itself.

Here, in order to release the interfacing device 400 from the wireless mouse 300, the release button disposed on the upper surface of the wireless mouse 300 is pushed, whereby a fixing member 520 moves downward. Then, the protrusion 522, which has been inserted into the recess 402 disposed on the interfacing device 400, also moves downward, whereby the interfacing device 400 is separated from the protrusion 522.

From the above preferred embodiments for the present invention, it is noted that modifications and variations can be made by a person skilled in the art in light of the above teachings. Therefore, it should be understood that changes may be made for a particular embodiment of the present invention within the scope and the spirit of the present invention outlined by the appended claims.

## Claims

1. A wireless mouse system comprising:
a wireless mouse; and
an interfacing device with a USB terminal, electrically communicated with a USB port of a information-displaying device, and having at least one recess disposed on a surface thereof,
wherein the interfacing device comprises:
a receiving device receiving a signal data transferred wirelessly from the wireless mouse, and transferring the signal to the information-displaying device; and
a flash memory device exchanging data with the information-displaying device through the USB terminal.

2. The wireless mouse system according to Claim 1, wherein the wireless mouse comprises a socket releasably retaining the interfacing device inserted therein.

3. The wireless mouse system according to Claim 2, wherein the wireless mouse further comprises a fixing member having at least one protrusion, and wherein at least one protrusion is releasably inserted into the at least one recess of the interfacing device retained in the socket.

4. The wireless mouse system according to Claim 3, wherein the at least one recess is disposed on the surface of the USB terminal.

5. The wireless mouse system according to Claim 3, wherein the at least one recess is disposed on the surface of the interfacing device.

6. The wireless mouse system according to Claim 3, wherein the fixing member comprises:
a release button coupled with the at least one protrusion, and disposed on a outer surface of the wireless mouse; and
an elastic member disposed in the socket for pushing the interfacing device to an outside of the wireless mouse,
wherein the at least one protrusion is released from the at least one recess by pressing the release button, and then the interfacing device is extracted from the wireless mouse by the elastic member.

7. The wireless mouse system according to Claim 6, wherein the elastic member is a spring.

8. The wireless mouse system according to Claim 3, wherein the at least one protrusion is wedge-shaped.

9. The wireless mouse system according to Claim 1, wherein the interfacing device further comprises a controller transferring the signal of the receiving device to the information-displaying device, exchanging the data of the flash memory device with the information-displaying device, and coupled to the USB terminal, the receiving device and the flash memory device.

10. The wireless mouse system according to Claim 9,
wherein the interfacing device further comprises a selection switch coupled to the controller, and switched to the receiving device or the flash memory device, and
wherein the controller transfers a control signal to the switched device by the selection switch.

11. The wireless mouse system according to Claim 1, wherein the receiving device comprises:
a signal receiver receiving the signal transferred wirelessly from the wireless mouse;
a CIS memory storing data about the receiving device;
a receiving device controller converting the signal transferred from the signal receiver into data for the information-displaying device; and
a bus controller transferring the data of the CIS memory to the receiving device controller, and coupling the receiving device with the information-displaying device for transferring the data transferred to the receiving device controller to the information-displaying device.

12. The wireless mouse system according to Claim 1, wherein the flash memory device comprises:
a flash memory storing the data;
an interface part converting the data generated from the flash memory into a USB signal, transferring the USB signal to the USB terminal, and receiving a signal generated from the information-displaying device; and
a flash memory controller storing the signal generated from the interface part in the flash memory, reading the data from the flash memory, and transferring the data to the interface part.

13. The wireless mouse system according to Claim 1, wherein the interfacing device further comprises a charging device coupled to the USB terminal and charged through the USB terminal.

14. A wireless mouse system according to Claim 11, wherein the wireless mouse comprises:
a socket releasably retaining the interfacing device inserted therein; and an auxiliary battery configured to couple with the USB terminal of the interfacing device retained in the socket, and
wherein the auxiliary battery is charged from the charging device.

15. A wireless mouse comprising a socket releasably retaining an interfacing device inserted therein,
wherein the interfacing device has a USB terminal, and at least one recess disposed on a surface of the interfacing device.

16. The wireless mouse according to Claim 15, wherein the wireless mouse further comprises a fixing member having at least one protrusion, and
wherein at least one protrusion is releasably inserted into the at least one recess of the interfacing device retained in the socket.

17. The wireless mouse according to Claim 16, wherein the fixing member comprises:
a release switch coupled with the at least one protrusion, and disposed on a outer surface of the wireless mouse; and
an elastic member disposed in the socket for pushing the interfacing device to an outside of the wireless mouse,
wherein the at least one protrusion is released from the at least one recess by pressing the release switch, and then the interfacing device is extracted from the wireless mouse by the elastic member.

18. The wireless mouse according to Claim 17, wherein the elastic member is a spring.

19. The wireless mouse according to Claim 16, wherein the at least one protrusion is wedge-shaped.

20. A wireless mouse system comprising:
a wireless mouse; and
an interfacing device electrically communicated with a USB port of a information-displaying device, and having a USB terminal,
wherein the interfacing device comprises:
a receiving device receiving a signal data transferred wirelessly from the wireless mouse, and transferring the signal to the information-displaying device; and
a flash memory device exchanging data with the information-displaying device through the USB terminal.
